# EUROPEAN PATENT SPECIFICATION

(11) **EP 3 031 196 B1**
(45) Date of publication and mention of the grant of the patent: **11.10.2017**
(21) Application number: 14834311.4
(22) Date of filing: 08.08.2014
(51) Int. Cl.: H04L 29/08

(54) **MIRROR PRESENCE BETWEEN WEBSITES**
SPIEGELPRÄSENZ ZWISCHEN WEBSITES
PRÉSENCE DE MIROIR ENTRE DES SITES WEB

(30) Priority: 08.08.2013 US 201313962733
(43) Date of publication of application: 15.06.2016
(73) Proprietor: Huawei Technologies Co., Ltd., Longgang District Shenzhen, Guangdong 518129 (CN)
(72) Inventor: LI, Li, Bridgewater, New Jersey 08807 (US); CHOU, Wu, Basking Ridge, New Jersey 07920 (US); CAI, Tao, Shenzhen Guangdong 518129 (CN)
(74) Representative: Pfenning, Meinig & Partner mbB
(86) International application number: PCT/CN2014/084007
(87) International publication number: WO 2015/018365

(56) References cited:
- CN-A- 102 823 225
- CN-A- 103 155 523
- US-A1- 2004 158 609
- US-A1- 2004 205 134
- LI, LI ET AL.: 'Mirror Presence: Secure Web Identity Resolution and Call Control for WebRTC' IIWAS '13 PROCEEDINGS OF INTERNATIONAL CONFERENCE ON INFORMATION INTEGRATION AND WEB- BASED APPLICATIONS & SERVICES 02 December 2013, pages 5 - 6, XP058044371
- DAVIDS, CAROL ET AL.: 'SIP APIs for Voice and Video Communications on the Web' IPTCOMM '11 PROCEEDINGS OF THE 5TH INTERNATIONAL CONFERENCE ON PRINCIPLES, SYSTEMS AND APPLICATIONS OF IP TELECOMMUNICATIONS 01 August 2011, XP055077404

## Description

### BACKGROUND

The Real-Time Communication over the World Wide Web (RTCWEB) is an effort to achieve a standardized infrastructure in web browsers on which real-time interactive communication between users of the World Wide Web can be achieved. The two main industry-driving standards are the World Wide Web Consortium (W3C) and the Internet Engineering Task Force (IETF). The major use cases for RTCWEB are real-time audio and/or video calls, web conferencing, and direct data transfer. In RTCWEB architecture, users may receive calls from web browsers at a target site, which the users agree to receive the calls, and the callers are required to know the target site. However, the web is a distributed system without any central authorities. As such, there is no global resolution system like Domain Name System (DNS) that binds a web identity to a web location. That is, there is no single identifier representing the combined knowledge of the web browser used by the user and the website where the user is present. In addition, users are likely to travel between websites. Thus, the expectation that all the users who need to call each other are on the same website at the same time may not be realistic or practical. Even if the users are on the same website, they may not know the presence of each other if third party identity providers are being used, such as OpenID^{®}, as third party identity providers may be independent of the website.

Consequently, there is a need in the art for methods and systems to provide a way for users to create distributed resolution systems that dynamically bind users' web identities to users' current web locations based on the users' web presence, such that calls may be routed efficiently and accurately while users are moving between websites.
US 2004/205134A discloses a system and method for immediate and delayed real-time communication activities using availability data from and communications through an external instant messaging system, that operates to obtain aggregated user online presence information through its own client software, through interception of client-server communications between an external instant messaging client and server, and through other available interfaces to user account information on such external instant messaging systems.
US 2004/158609A provides systems for forwarding incoming instant messages comprise a primary IM processing device configured to send and receive IM messages. The primary IM processing device is further configured to forward incoming IM messages to an available secondary IM processing devices based upon presence information and availability information on a plurality of secondary IM processing devices.

### SUMMARY

The present invention is as defined in the appended independent claims. Further implementations are disclosed in the appended dependent claims, description and figures. In one embodiment, the disclosure includes a mirror presence system comprising a mirror site configured to couple to a visitor site via a communication network, establish a mirror presence relationship through a presence message between the mirror site and the visitor site, perform a mirror presence at the mirror site by mirroring a direct presence of a user at the visitor site to a mirror presence of the user at the mirror site according to the established mirror presence relationship when the user is connected to the visitor site through a user device, wherein the direct presence of the user at the visitor site occurs when the user connects to the visitor site directly, and provide a caller accessing the mirror site through a calling site with an online presence state of the user at the mirror site according to the mirror presence even though the user is not directly connected to the mirror site.

In another embodiment, the disclosure includes an apparatus comprising a memory comprising instructions, and a processor coupled to the memory, wherein the instructions cause the processor to create a mirror presence subscription for a presence service from a mirror site to a visitor site, wherein creating the mirror presence subscription establishes a mirror presence relationship through a presence message between the visitor site and the mirror site, send a presence activation request to the visitor site when a caller for a user connects to the mirror site via a first web browser, obtain from the visitor site an online status of the user at the visitor site when the user connects to the visitor site, and provide the online status of the user to the caller via the first web browser.

In another embodiment, the disclosure includes a method for managing a mirror presence at a visitor site, comprising receiving a presence subscription request for a presence service from a mirror site, wherein a mirror presence relationship between the visitor site and the mirror site is established according to instructions from a user, receiving a presence resume message from the mirror site to activate the presence service, sending an online presence event to the mirror site when the user directly connects to the visitor site, receiving a presence pause message from the mirror site when the user directly connects to the mirror site, and stopping to send the online presence event to the mirror site when the user connects to the visitor site after receiving the presence pause message.

These and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 is a schematic diagram of an embodiment of one embodiment of a system for mirror presence.
FIG. 2 is a schematic diagram of an embodiment of another embodiment of a system for mirror presence.
FIG. 3 is a diagram of an embodiment of server components.
FIG. 4 is a protocol diagram of an embodiment of an embodiment of a mirror presence protocol.
FIG. 5 is a protocol diagram of an embodiment of another embodiment of a mirror presence protocol.
FIG. 6 is a schematic diagram of an embodiment of a network element.

### DETAILED DESCRIPTION

It should be understood at the outset that, although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Presence is a familiar concept for Instant Messaging (IM) systems. Presence refers to the appearance of a user on the World Wide Web available and willing to communicate with other users. A user may have multiple web accounts on multiple websites with different user identifiers. One of the challenges in RTCWEB may be to support the presence of a user across different websites. For instance, a user may log onto Yahoo^{®}, while the user's friends may be present on other websites such as Google^{®} or Facebook^{®} and may want to call the user. However, the user's presence is not known to the any other websites, other than the website to which the user is currently logged on.

In RTCWEB, every user on the network is identified by a user identifier. However, a user identifier may not reveal the actual web location where the user is present. Thus, this may pose another challenge for RTCWEB. For example, a user may be identified by an email address or other identifiers obtained from different websites. The user may use a Gmail^{®} email account as an identifier to log onto a website that is not related to Google^{®}. As such, there is a gap between the users' identifiers and actual web locations.

Some of the current technologies may attempt to draw some presence relations between different presentities. However, they may not provide a user's global presence across different websites. For instance, current presence architecture may employ a presentity and watcher model, such as Session Initiation Protocol (SIP) and Extensible Messaging and Presence Protocol (XMPP), where a presentity may obtain a group of presence agents or devices, and a watcher may subscribe to a presentity to receive presence update from the presentity. However, two distinct presentities may not share their presence with each other in this architecture.

The inter-domain presence federation supported in SIP and XMPP attempts to provide some relations between different presentities where a user in one domain may subscribe and receive presence of a user in another domain. However, the presence federation support may be limited to primitives such as subscribe and notify only. Again, the presence of two entities may not be bound.

Another system attempts to find a user at web locations and devices by assigning a single virtual endpoint to serve as a proxy for many physical endpoints, such as the Find Me/Follow call-forwarding services. In this system, a user may have multiple physical phone numbers and a virtual phone number assigned by the system. When the system receives a call for the virtual phone number, the system may locate the user by routing the call to any or all the physical numbers as configured by the user.

In a Voice Over Internet Protocol (VoIP) system, a centralized name resolution system may be used to map a user identifier to an Internet Protocol (IP) address. However, the web is a completely distributed system with many websites and thus developing a centralized name resolution system for all websites to share may not be realistic. Consequently, a personal name resolution system that may connect all the web accounts of a user across all websites may be needed.

Disclosed herein are methods, apparatuses, and systems that may be used to provide a mirror presence, where the presence of a resource at one website may reflect the presence of a different resource at another website. In one embodiment, a user may construct and maintain a personal web resolution system by recruiting a few mirror sites to track the sites that the user has visited, through presence subscription, notification, and composition. In another embodiment, the disclosure includes three types of web resources, a direct presence, a mirror presence, and a presentity for each identity on a website. The mirror presence protocol includes the presence subscription process from a web browser and the management of the mirror presence. In another embodiment, another embodiment of the mirror presence protocol is shown where a web browser may directly report presence to a mirror site and to accept cookie from a mirror site. The disclosed embodiments may provide users a personal web resolution system and thus may improve users' mobility, availability, and privacy. For instance, a user may receive calls from multiple sites without directly connecting to each of the sites, switch browsers or devices without reestablishing mirror presence relations, and conceal his direct presence. The disclosed embodiments may also benefit websites, such as increased user loyalty (stickiness) since users are less likely to leave a website in order to receive calls from other sites. The disclosed embodiments may reduce traffic since presence messages are small compared to repetitive call messages and redirect calls for load balancing if a pool of mirror sites is available. The disclosed embodiments may also be readily implemented in servers within current presence architectures and protocols.

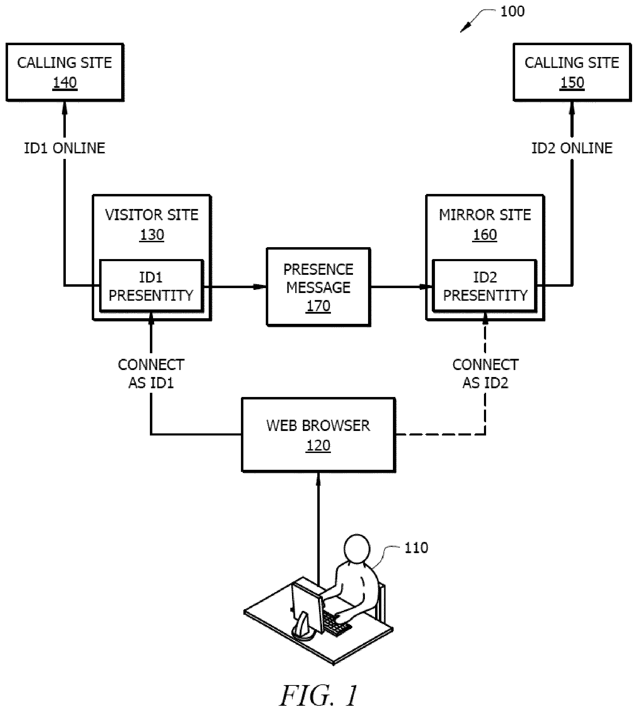

FIG. 1 is a schematic diagram of one embodiment of a system 100 illustrating the mirror presence system. In system 100, a user 110 may use a web browser 120 to traverse from website to website. Each website may comprise a presentity module managing the presence of the user. The user 110 may have a web account on website 130 identified by an identifier Id1 and a web account on another website 160 identified by an identifier Id2, where the identifiers Id1 and Id2 are managed independently by each of the websites. The disclosed system introduces a presence relationship between the two identifiers, where a user presence on one website may be mirrored to another website by sending a presence message 170. For instance, the user 110 may logon to the website 130 using identifier Id1. That is, the user is visiting website 130. Thus, the website 130 is a visitor site. A caller may call the user at website 130 using identifier Id1. At the same time, the mirror presence established through a presence message 170 may allow a caller from a calling site 150 to call the user at website 160, where the user may also appear as Id2 as if the user is connected to the website 160 directly. As used herein, direct connection may refer to a webpage or service that is displayed on a user's web browser without regard to whether there are intermediate servers involved in the communication between the user's web browser and the webpage or service. In contrast, a mirror site may be a webpage or service that is aware of or displays a user's online status even though the user's web browser is not directly connected to or otherwise interacting with the mirror site. Hence, the website 160 is termed the mirror site. That is, the Id2 presence on website 160 reflects the Id1 presence on website 130. In another case, the user may connect to the website 160 directly as well. Then, the mirror presence and the direct presence may be aggregated to present a coherent presence on the website 160. In the disclosed system, users may decide on the mirror sites and the duration of the mirror presence.

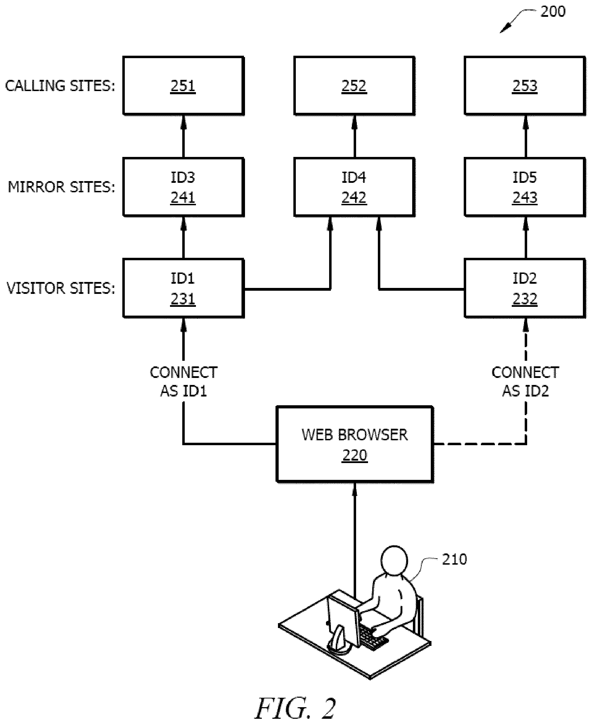

Another embodiment of the mirror presence of the mirror presence system 100 is shown in FIG. 2 as system 200. In system 200, a user 210 may have web accounts on several websites 231, 232, 241, 242, and 243 with user identifiers Id1 Id2, Id3, Id4, and Id5, respectively. The user 210 may use a web browser 220 to visit multiple websites. The user 210 may be visiting the websites 231 and 232 directly with user identifiers Id1 and Id2, respectively. The user 210 may choose websites 241, 242, and 243 as mirror sites. The user 210 may establish many-to-many mirror presence relations among these websites. For example, the user 210 may establish the websites 241 and 242 as mirror sites for the visitor site 231, and the websites 242 and 243 as mirror sites for the visitor site 232. That is, when the user 210 is logged in to the visitor site 231, the user presence may be mirrored to the mirror sites 241 and 242. Similarly, when the user 210 is logged in to the visitor site 232, the user presence may be mirrored to the mirror sites 242 and 243. As such, the user's direct presence on the visitor sites is magnified through the mirror sites irrespective of the different identities for different websites.

In system 200, the user 210 may receive any form of communication (calls) from any of the mirror sites or visitor sites. For example, a friend may call the user 210 using identifier Id4 from the calling site 252. The call may be routed to the mirror site 242 and then may be forwarded to one of the visitor sites, either visitor site 231 or 232, by traversing the mirror presence relations in reverse direction. Similarly, calls from the calling sites 251 or 253 may also reach the user at the visitor site 231 or 232 by traversing the mirror presence relations in reverse directions. Hence, the disclosed system may provide a distributed resolution system for a user with accounts on many websites to establish relations between visitor sites and mirror sites. The user may then be contacted at any of the mirror sites by using the user's identity for the corresponding websites.

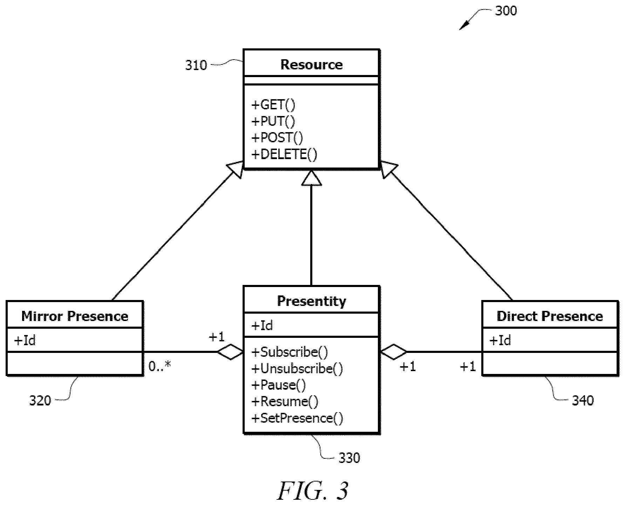

FIG. 3 is a diagram 300 that illustrates one embodiment of the modules that may be required for a server to support mirror presence. At a server, a web resource 310 may be derived from three modules, a mirror presence module 320, a direct presence module 340, and a presentity module 330. Each module presents one type of presence the server is monitoring. The direct presence module 340 may comprise a user identifier and manages the user's direct presence. The mirror presence module 320 may comprise a user identifier and manages the user's mirror presence. The presentity module 330 may comprise a user identifier and manages the user's presence state indicating the online status or offline status of the user. A direct presence may be established when a user connects directly to a website, namely the visitor site. A mirror presence may be established when a presence message is received from a visitor site. A presentity may aggregate the direct presence and the mirror presence when the user is directly connected to a mirror site. The aggregated presence may then be presented to other sites. As such, other sites may not know if the user is directly logged into a website or through a mirror presence. Presentity may also accept actions such as subscribe, unsubscribe, pause, resume, and set presence state from browsers and websites. The disclosed modules may be implemented in any server-side programming language (e.g. Java) and may be deployed to any web application framework (e.g. Tomcat).

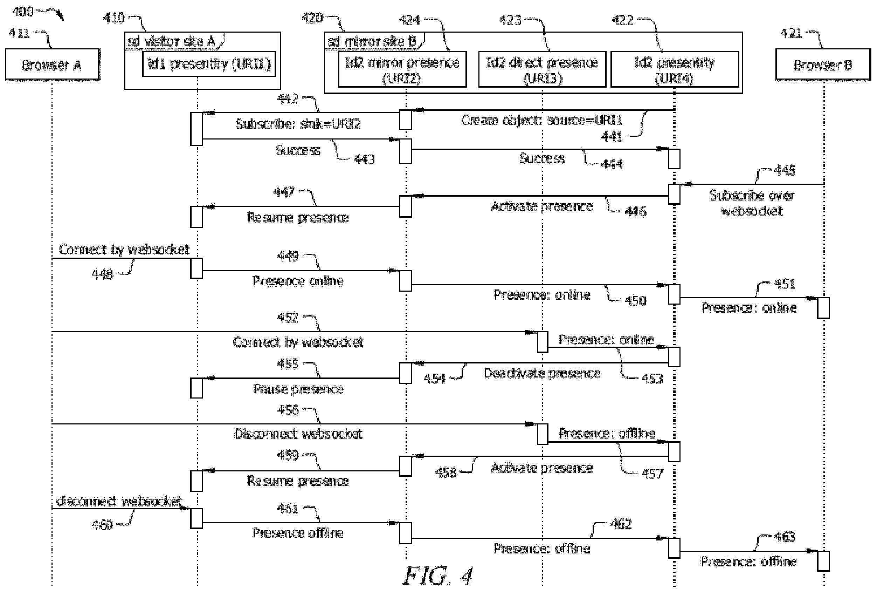

FIG. 4 is a protocol diagram of an embodiment of a mirror presence protocol 400 illustrating the interactions between a browser A 411, a visitor site A 410, a mirror site B 420, and a browser B 421, as well as module interactions within the mirror site B 420. The mirror presence protocol may involve the server components as discussed in FIG. 3. Thus, the direct presence module 423, the mirror presence module 424, and the presentity module 422 at the mirror site B 420 may work together to support the mirror presence protocol. The interactions at the visitor site A 410 are assumed to be performed by the presentity module 422. In the following discussions, the term visitor site A 410 may be referred to as the presentity module at the visitor site A.

The mirror presence protocol 400 may be presented with an example where a user may manage his presence via a web browser A 411 and connects directly to a visitor site A 410, and a friend who is interested in the user's presence state connecting to a mirror site B 420 via a web browser B 421. Protocol 400 illustrates the establishment and management of mirror presence via multiple processes including subscription creation, subscription activation, online presence notification, mirror presence deactivation, mirror presence reactivation, and offline presence notification. Protocol 400 may be carried out using any standard presence protocol, such as SIP, XMPP, or any other subscription exchange protocols.

The subscription creation process may begin when a mirror site B 420 is interested in receiving the presence state of the user at the visitor site A 410, where mirror site B 420 may subscribe to visitor site A 410 for a presence service. At step 441, the presentity module 422 at the mirror site B 420 may generate a subscription creation message and send the message to the mirror presence module 424. At step 442, a subscription message may be sent from the mirror presence module 424 to the visitor site A 410. After the visitor site A 410 receives the subscription message, the visitor site A 410 may send a success message to the mirror presence module 424 indicating the successful subscription. At step 444, the mirror presence module 424 may forward the success message to the presentity module 422. At this time, the subscription is completed, but the presentity is in an inactive state.

The subscription activation process may begin when the friend at the mirror site B 420 is interested in the user's presence. At step 445, the friend may login to mirror site B 420 via web browser B 421 and send a subscription message to the presentity module 422 via a web socket. At step 446, the presentity module 422 may generate a presence activation message and send the message to the mirror presence module 424. At step 447, the mirror presence module 424 may send a presence resume message to the visitor site A 410 to activate the subscription. At this time, the presentity is activated. Note this may occur prior to the user login to the visitor site A 410. This serves as a request to be notified by the visitor site A 410 when the user is online.

The online presence notification process may begin when the user logs in to the visitor site A 410 via a browser A 411 and a connection message may be sent to the visitor site A 410 via a web socket as shown in step 448. At step 449, the visitor site A 410 may generate a presence event to indicate the user's online status and send an online presence event to the mirror site B 420. At step 450, the mirror presence module 424 may forward the online presence event to the presentity module 422. At step 451, the presentity module 422 may forward the online presence event to the browser B 421. Thus, the friend may know the user is now online.

The mirror presence deactivation process may begin when the user logs in to the mirror site B 420 directly via web browser A 411 and a connection message may be sent to the direct presence module 423 via a web socket as shown in step 452. At step 453, the direct presence module 423 may send an online presence event to the presentity module 422. Note that the online presence event is not forwarded to the browser B 421 since the online presence event is the same as in step 451. At step 454, the presentity module 422 may send a mirror presence deactivation message to the mirror presence module 424. At step 455, the mirror presence module 424 may send a presence pause message to the visitor site A 410 to deactivate the mirror presence. At this time, the mirror presence (Uniform Resource Identifier 1 (URI1)) is deactivated. The deactivation may reduce network traffic and may be optional since both the direct presence and the mirror presence are known at the mirror site B 420. The deactivation process may serve as an example for presence aggregation and should in no way be limited to this example.

The mirror presence re-activation process may begin when the user disconnects the direct presence from the mirror site B 420 via web browser A 411 and a disconnection message may be sent to the direct presence module 423 via a web socket as shown in step 456. At step 457, the direct presence module 423 may send an offline presence event to the presentity module 422. Note that the offline presence event is not forwarded to the browser B 421 since the user is still online through the direct presence at the visitor site A 410. However, the user is no longer connected to the mirror site B 420. Thus, the mirror presence may need to be re-activated. At step 458, the presentity module 422 may send a presence activation message to the mirror presence module 424. At step 459, the mirror presence module 424 may send a presence resume message to the visitor site A 410 to re-activate the mirror presence.

The presence offline notification may begin when the user disconnects from the visitor site A 410 via web browser A 411 and a disconnection message may be sent to the visitor site A 410 over a web socket as shown in step 460. At step 461, the visitor site A 410 may generate a presence event to indicate the user's offline status and send the offline presence event to the mirror site B 420. At step 462, the mirror presence module 424 may forward the offline event to the presentity module 422. At step 463, the presentity module 422 may forward the offline event to the browser B 421. The user is no longer on visitor site A 410, or mirror site B 420. Thus, the user's presence state is now offline.

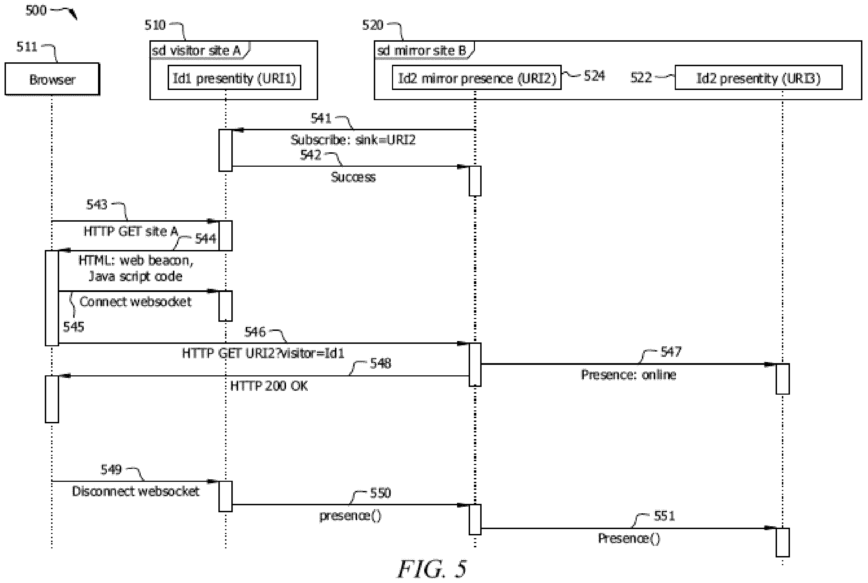

Another embodiment of the mirror presence protocol 400 of FIG. 4 is shown in FIG. 5 as protocol 500. In protocol 500, steps 541-542 show the mirror site B 520 subscription process which may be similar to the subscription process as in steps 441-443 of protocol 400 discussed above, but the mirror presence may be established in an alternative way by using a web beacon to indicate the online status of the user and a web socket to indicate the offline status of the user instead of sending presence messages as in protocol 400. The online presence event and the offline presence event in protocol 500 will be discussed separately.

Protocol 500 may use a web beacon for online status establishment. At step 543, the user may connect to the visitor site A 510 using identifier Id1 by opening a web page via web browser 511 where a Hyper Text Transfer Protocol (HTTP) get message may be sent to the visitor site A 510. At step 544, the visitor site A 510 may choose to embed a web beacon in the web page when the web page is returned to the browser. The web beacon may contain a Uniform Resource Identifier (URI) pointing to the mirror site B 520 (URI2). The nature of a browser is to open all URIs. Thus, at step 546, once the web page is returned to the browser 511, a HTTP request may be sent to the mirror site B 520. This HTTP request may act as an indicator to the mirror site B 520 that the user is online. Thus, at step 547, the mirror presence module 524 may generate an online presence event and send the online presence event to the presentity module 522. At step 548, the mirror presence module 524 may send a HTTP successful message to the visitor site A 510.

The web beacon may only provide the online status of a user. The offline status of a user may be detected by using a web socket. Returning back to step 544, the visitor site A 510 may choose to embed a Java Script code to create a web socket connection to the visitor site A 510 (URI1) in the web page when the web page is returned to the browser as shown in step 545. That way, when the user disconnects from the visitor site A 510 as shown in step 549, the visitor site A 510 may obtain the offline status of the user. Thus, in step 550, the presentity module 522 at visitor site A 510 may generate an offline presence event and send the offline presence event to the mirror presence module 524 at mirror site B 520. Next, at step 551, the mirror presence module 524 may forward the offline presence event to the presentity module 522.

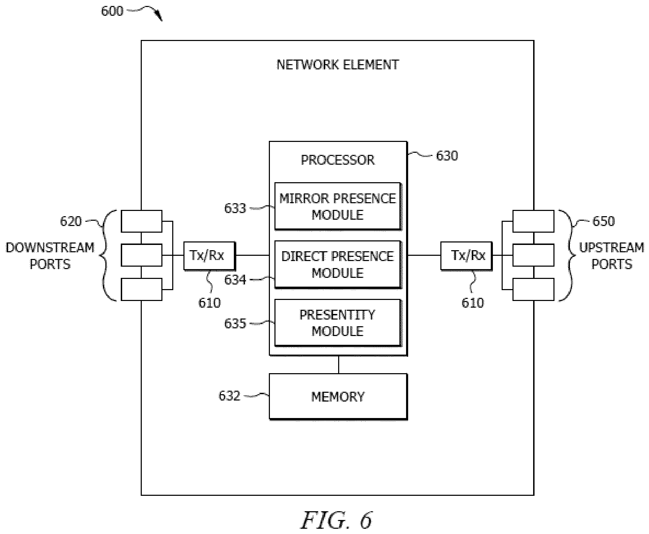

FIG. 6 is a schematic diagram of an embodiment of a Network Element (NE) 600, which may be configured to be a web server at a visitor site A 410 or a mirror site B 420 to provide mirror presence management. In some embodiments, NE 600 may also act as other node(s) in the network. One skilled in the art will recognize that the term NE encompasses a broad range of devices of which NE 600 is merely an example. NE 600 is included for purposes of clarity of discussion, but is in no way meant to limit the application of the present disclosure to a particular NE embodiment or class of NE embodiments. At least some of the features/methods described in the disclosure may be implemented in a network apparatus or component such as an NE 600. For instance, the features/methods in the disclosure may be implemented using hardware, firmware, and/or software installed to run on hardware. The NE 600 may be any device that transports frames through a network, e.g., a switch, router, bridge, server, a client, etc. As shown in FIG. 6, the NE 600 may comprise transceivers (Tx/Rx) 610, which may be transmitters, receivers, or combinations thereof. A Tx/Rx 610 may be coupled to plurality of downstream ports 620 for transmitting and/or receiving frames from other nodes and a Tx/Rx 610 coupled to plurality of upstream ports 650 for transmitting and/or receiving frames from other nodes, respectively. A processor 630 may be coupled to the Tx/Rx 610 to process the frames and/or determine which nodes to send the frames. The processor 630 may comprise one or more multi-core processors and/or memory devices 632, which may function as data stores, buffers, etc. Processor 630 may be implemented as a general processor or may be part of one or more application specific integrated circuits (ASICs) and/or digital signal processors (DSPs). Processor 630 may comprise a mirror presence module 633, a direct presence module 634, and a presentity module 635 (e.g. similar to the mirror presence module 320, a direct presence module 340, and a presentity module 330), which may implement the mirror presence protocol 400 or the mirror presence protocol described in protocol 500. In an alternative embodiment, the mirror presence module 633, and/or direct presence module 634, and/or the presentity module 635 may be implemented as instructions stored in memory 632, which may be executed by processor 630. The memory module 632 may comprise a cache for temporarily storing content, e.g., a Random Access Memory (RAM). Additionally, the memory module 632 may comprise a long-term storage for storing content relatively longer, e.g., a Read Only Memory (ROM). For instance, the cache and the long-term storage may include dynamic random-access memories (DRAMs), solid-state drives (SSDs), hard disks, or combinations thereof.

It is understood that by programming and/or loading executable instructions onto the NE 600, at least one of the processor 630, the cache, and the long-term storage are changed, transforming the NE 600 in part into a particular machine or apparatus, e.g., a multi-core forwarding architecture, having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be implemented in software, because re-spinning a hardware implementation is more expensive than re-spinning a software design. Generally, a design that is stable that will be produced in large volume may be implemented in hardware, for example in an ASIC, because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

## Claims

1. A mirror presence system comprising:
a mirror site (160) configured to:
couple to a visitor site (130) via a communication network;
establish a mirror presence relationship through a presence message (170) between the mirror site and the visitor site;
perform a mirror presence at the mirror site by mirroring a direct presence of a user at the visitor site to a mirror presence of the user at the mirror site according to the established mirror presence relationship when the user is connected to the visitor site through a user device, wherein the direct presence of the user at the visitor site occurs when the user connects to the visitor site directly; and
provide a caller accessing the mirror site through a calling site with an online presence state of the user at the mirror site according to the mirror presence even though the user is not directly connected to the mirror site.

2. The system of claim 1, wherein the mirror site establishes the mirror presence relationship between the mirror site and the visitor site through subscribing to receive the direct presence of the user at the visitor site from the visitor site.

3. The system of claim 1, wherein the mirror site is further configured to provide the caller with an user's identity of the user at the mirror site associated with the online presence state of the user at the mirror site as if the user is connected to the mirror site directly, wherein the user has a different user identifier for the visitor site and the mirror site.

4. The system of claim 1, wherein the mirror site is further configured to map a user's identity at the mirror site to a web location where the user is present.

5. The system of claim 1 further comprising a plurality of mirror sites, wherein each mirror site has a mirror presence relationship with the visitor site.

6. The system of claim 1, wherein the mirror site has a plurality of mirror presence relationships with a plurality of the visitor sites, and wherein the mirror presence relationships are configurable.

7. The system of claim 3, wherein the user's identity and the mirror presence relationship at the mirror site are used when routing a call from the calling site to the visitor site.

8. The system of claim 1, wherein the mirror site is further configured to provide an aggregate presence of the user at the mirror site by combining the mirror presence and the direct presence of the user at the mirror site.

9. An apparatus comprising:
a memory (632) comprising instructions; and
a processor (630) coupled to the memory, wherein the instructions cause the processor to: create a mirror presence subscription for a presence service from a mirror site (160) to a visitor site (130), wherein creating the mirror presence subscription establishes a mirror presence relationship through a presence message between the visitor site and the mirror site;
send a presence activation request to the visitor site when a caller that calls a user connects to the mirror site via a first web browser;
obtain from the visitor site an online status of the user at the visitor site when the user connects to the visitor site; and
provide the online status of the user to the caller via the first web browser.

10. The apparatus of claim 9, wherein the instructions further cause the processor to provide the online status of the user at the mirror site to the caller via the first web browser.

11. The apparatus of claim 9, wherein the instructions further cause the processor to:
receive an offline status of the user at the visitor site from the visitor site when the user disconnects from the visitor site; and
provide the offline status of the user to the caller via the first web browser.

12. The apparatus of claim 9, wherein creating the mirror presence subscription comprises:
generating a subscription creation message;
sending the subscription creation message from the mirror site to the visitor site; and
receiving from the visitor site a success message indicating a successful subscription.

13. The apparatus of claim 12, wherein creating the mirror presence subscription further comprises:
sending the subscription creation message from a presentity component to a mirror presence component;
sending the subscription creation message from the mirror presence component to the visitor site;
receiving the success message at the mirror presence component, wherein the success message is sent by the visitor site; and
forwarding the success message from the mirror presence component to the presentity component.

14. The apparatus of claim 9, wherein sending the presence activation request comprises:
receiving a subscription message from the first web browser;
sending a presence activation message from a presentity component to a mirror presence component; and
sending a presence resume message from the mirror presence component to the visitor site.

15. The apparatus of claim 9, wherein receiving the online status comprises:
receiving an online presence event at a mirror presence component, wherein the online presence event is sent by the visitor site; and
forwarding the online presence event from the mirror presence component to a presentity component, and
wherein providing the online status of the user to the caller via the first web browser comprises forwarding the online presence event from the presentity component to the first web browser.

16. The apparatus of claim 11, wherein receiving the offline status comprises:
receiving an offline presence event at a mirror presence component, wherein the offline presence event is sent by the visitor site; and
forwarding the offline presence event from the mirror presence component to a presentity component, and
wherein providing the offline status of the user to the caller via the first web browser comprises forwarding the offline presence event from the presentity component to the first web browser.

17. The apparatus of claim 9, wherein the instructions further cause the processor to:
aggregate the online status of the user at the visitor site and the online status of the user at the mirror site when the user connects directly to the mirror site via a second web browser; and
deactivate the presence service from the visitor site.

18. The apparatus of claim 9, wherein obtaining an online status of the user at the visitor site from the visitor site when the user connects to the visitor site comprises:
receiving a Hyper Text Transfer Protocol, HTTP, get message at a mirror presence component, wherein the HTTP get message is sent by a second web browser when the second web browser receives a web page from the visitor site, wherein the web page is requested by the user, and wherein the web page is embedded with a web beacon comprising a Universal Resource Indicator, URI, pointing to the mirror site;
sending an online presence event from the mirror presence component to a presentity component; and
sending a HTTP successful message from the mirror presence component to the second web browser.

19. A method for managing a mirror presence at a visitor site (130), comprising:
receiving a presence subscription request for a presence service from a mirror site(160), wherein a mirror presence relationship between the visitor site and the mirror site is established according to instructions from a user;
receiving a presence resume message from the mirror site to activate the presence service;
sending an online presence event to the mirror site when the user directly connects to the visitor site;
receiving a presence pause message from the mirror site when the user directly connects to the mirror site; and
stopping to send the online presence event to the mirror site when the user connects to the visitor site after receiving the presence pause message.

20. The method of claim 19, further comprising:
receiving the presence resume message from the mirror site when the user disconnects from the mirror site; and
resuming to send the online presence event to the mirror site when the user connects to the visitor site.

21. The method of claim 19, further comprising:
receiving a Hyper Text Transfer Protocol, HTTP, get message from a web browser requesting a web page;
embedding a web beacon in the web page, wherein the web beacon comprises a Universal Resource Indicator, URI, pointing to the mirror site; and
returning the web page with the embedded web beacon which triggers a HTTP request to be sent to the mirror site to perform the process of sending the online presence event to the mirror site.

22. The method of claim 21, further comprising:
embedding a Java Script code in the web page, wherein the Java Script code comprises code to create a web socket connection to the visitor site;
receiving a web socket connect from the web browser when the web page is returned to the web browser;
obtaining an offline status of the user when the user disconnects from the visitor site; and
sending an offline presence event to the mirror site.

## Patentansprüche

1. Spiegelpräsenzsystem, umfassend:
eine Spiegel-Site (160), die zu Folgendem konfiguriert ist:
Koppeln mit einer Besucher-Site (130) über ein Kommunikationsnetz;
Erstellen einer Spiegelpräsenzbeziehung über eine Präsenznachricht (170) zwischen der Spiegel-Site und der Besucher-Site;
Durchführen einer Spiegelpräsenz an der Spiegel-Site durch Spiegeln einer direkten Präsenz eines Benutzers an der Besucher-Site zu einer Spiegelpräsenz des Benutzers an der Spiegel-Site gemäß der erstellten Spiegelpräsenzbeziehung, wenn der Benutzer über eine Benutzereinrichtung mit der Besucher-Site verbunden ist, wobei die direkte Präsenz des Benutzers an der Besucher-Site auftritt, wenn sich der Benutzer direkt mit der Besucher-Site verbindet; und
Bereitstellen eines Online-Präsenzzustands des Benutzers an der Spiegel-Site an einen Anrufer, der auf die Spiegel-Site über eine anrufende Site zugreift, gemäß der Spiegelpräsenz, obwohl der Benutzer nicht direkt mit der Spiegel-Site verbunden ist.

2. System nach Anspruch 1, wobei die Spiegel-Site die Spiegelpräsenzbeziehung zwischen der Spiegel-Site und der Besucher-Site über ein Subskribieren erstellt, so dass die direkte Präsenz des Benutzers an der Besucher-Site von der Besucher-Site empfangen wird.

3. System nach Anspruch 1, wobei die Spiegel-Site ferner zum Bereitstellen einer Benutzerkennung des Benutzers an der Spiegel-Site, die mit dem Online-Präsenzzustand des Benutzers an der Spiegel-Site assoziiert ist, als ob der Benutzer mit der Spiegel-Site direkt verbunden ist, an den Anrufer konfiguriert ist, wobei der Benutzer eine unterschiedliche Benutzerkennung für die Besucher-Site und die Spiegel-Site aufweist.

4. System nach Anspruch 1, wobei die Spiegel-Site ferner zum Abbilden einer Benutzerkennung an der Spiegel-Site zu einem Webstandort, an dem sich der Benutzer befindet, konfiguriert ist.

5. System nach Anspruch 1, das ferner mehrere Spiegel-Sites umfasst, wobei jede Spiegel-Site eine Spiegelpräsenzbeziehung mit der Besucher-Site aufweist.

6. System nach Anspruch 1, wobei die Spiegel-Site mehrere Spiegelpräsenzbeziehungen mit mehreren der Besucher-Sites aufweist und wobei die Spiegelpräsenzbeziehungen konfigurierbar sind.

7. System nach Anspruch 3, wobei die Benutzerkennung und die Spiegelpräsenzbeziehung an der Spiegel-Site verwendet werden, wenn ein Anruf von der anrufenden Site zur Besucher-Site geroutet wird.

8. System nach Anspruch 1, wobei die Spiegel-Site ferner zum Bereitstellen einer Aggregatpräsenz des Benutzers an der Spiegel-Site durch Kombinieren der Spiegelpräsenz und der direkten Präsenz des Benutzers an der Spiegel-Site konfiguriert ist.

9. Vorrichtung, umfassend:
einen Speicher (632), der Anweisungen umfasst; und
einen Prozessor (630), der mit dem Speicher gekoppelt ist, wobei die Anweisungen den Prozessor zu Folgendem veranlassen:
Erzeugen einer Spiegelpräsenzsubskription für einen Präsenzdienst von einer Spiegel-Site (160) zu einer Besucher-Site (130), wobei das Erzeugen der Spiegelpräsenzsubskription eine Spiegelpräsenzbeziehung über eine Präsenznachricht zwischen der Besucher-Site und der Spiegel-Site erstellt;
Senden einer Präsenzaktivierungsanforderung zur Besucher-Site, wenn sich ein Anrufer, der einen Benutzer anruft, über einen ersten Webbrowser mit der Spiegel-Site verbindet;
Erhalten, von der Besucher-Site, eines Online-Status des Benutzers an der Besucher-Site, wenn sich der Benutzer mit der Besucher-Site verbindet; und
Bereitstellen des Online-Status des Benutzers über den ersten Webbrowser an den Anrufer.

10. Vorrichtung nach Anspruch 9, wobei die Anweisungen ferner bewirken, dass der Prozessor den Online-Status des Benutzers an der Spiegel-Site über den ersten Webbrowser an den Anrufer bereitstellt.

11. Vorrichtung nach Anspruch 9, wobei die Anweisungen den Prozessor ferner zu Folgendem veranlassen:
Empfangen eines Offline-Status des Benutzers an der Besucher-Site von der Besucher-Site, wenn sich der Benutzer von der Besucher-Site abtrennt; und
Bereitstellen des Offline-Status des Benutzers über den ersten Webbrowser an den Anrufer.

12. Vorrichtung nach Anspruch 9, wobei das Erzeugen der Spiegelpräsenzsubskription Folgendes umfasst:
Generieren einer Subskriptionserzeugungsnachricht;
Senden der Subskriptionserzeugungsnachricht von der Spiegel-Site zur Besucher-Site und
Empfangen einer Erfolgsnachricht, die eine erfolgreiche Subskription angibt, von der Besucher-Site.

13. Vorrichtung nach Anspruch 12, wobei das Erzeugen der Spiegelpräsenzsubskription ferner Folgendes umfasst:
Senden der Subskriptionserzeugungsnachricht von einer Präsentitätskomponente zu einer Spiegelpräsenzkomponente;
Senden der Subskriptionserzeugungsnachricht von der Spiegelpräsenzkomponente zur Besucher-Site;
Empfangen der Erfolgsnachricht an der Spiegelpräsenzkomponente, wobei die Erfolgsnachricht durch die Besucher-Site gesendet wird; und
Weiterleiten der Erfolgsnachricht von der Spiegelpräsenzkomponente zur Präsentitätskomponente.

14. Vorrichtung nach Anspruch 9, wobei das Senden der Präsenzaktivierungsanforderung Folgendes umfasst:
Empfangen einer Subskriptionsnachricht vom ersten Webbrowser;
Senden einer Präsenzaktivierungsnachricht von einer Präsentitätskomponente zu einer Spiegelpräsenzkomponente und
Senden einer Präsenzwiederaufnahmenachricht von der Spiegelpräsenzkomponente zur Besucher-Site.

15. Vorrichtung nach Anspruch 9, wobei das Empfangen des Online-Status Folgendes umfasst:
Empfangen eines Online-Präsenzereignisses an einer Spiegelpräsenzkomponente,
wobei das Online-Präsenzereignis durch die Besucher-Site gesendet wird; und
Weiterleiten des Online-Präsenzereignisses von der Spiegelpräsenzkomponente zu einer Präsentitätskomponente und
wobei das Bereitstellen des Online-Status des Benutzers über den ersten Webbrowser an den Anrufer Weiterleiten des Online-Präsenzereignisses von der Präsentitätskomponente zum ersten Webbrowser umfasst.

16. Vorrichtung nach Anspruch 11, wobei das Empfangen des Offline-Status Folgendes umfasst:
Empfangen eines Offline-Präsenzereignisses an einer Spiegelpräsenzkomponente, wobei das Offline-Präsenzereignis durch die Besucher-Site gesendet wird; und
Weiterleiten des Offline-Präsenzereignisses von der Spiegelpräsenzkomponente zu einer Präsentitätskomponente und
wobei das Bereitstellen des Offline-Status des Benutzers über den ersten Webbrowser an den Anrufer Weiterleiten des Offline-Präsenzereignisses von der Präsentitätskomponente zum ersten Webbrowser umfasst.

17. Vorrichtung nach Anspruch 9, wobei die die Anweisungen den Prozessor ferner zu Folgendem veranlassen:
Aggregieren des Online-Status des Benutzers an der Besucher-Site und des Online-Status des Benutzers an der Spiegel-Site, wenn sich der Benutzer über einen zweiten Webbrowser direkt mit der Spiegel-Site verbindet; und
Deaktivieren des Präsenzdienstes von der Besucher-Site.

18. Vorrichtung nach Anspruch 9, wobei das Erhalten eines Online-Status des Benutzers an der Besucher-Site von der Besucher-Site, wenn sich der Benutzer mit der Besucher-Site verbindet, Folgendes umfasst:
Empfangen einer Hyptertext-Transferprotokoll-"Get"-Nachricht bzw. HTTP-"Get"-Nachricht an einer Spiegelpräsenzkomponente, wobei die HTTP-"Get"-Nachricht durch einen zweiten Webbrowser gesendet wird, wenn der zweite Webbrowser eine Webseite von der Besucher-Site empfängt, wobei die Webseite durch den Benutzer angefordert wird und wobei ein Webbeacon, der eine "Universal Resource Indicator" bzw. URI umfasst, die zur Spiegel-Site zeigt, in die Webseite eingebettet ist;
Senden eines Online-Präsenzereignisses von der Spiegelpräsenzkomponente zu einer Präsentitätskomponente und
Senden einer HTTP-"Successful"-Nachricht von der Spiegelpräsenzkomponente zum zweiten Webbrowser.

19. Verfahren zum Verwalten einer Spiegelpräsenz an einer Besucher-Site (130), umfassend:
Empfangen einer Präsenzsubskriptionsanforderung für einen Präsenzdienst von einer Spiegel-Site (160), wobei eine Spiegelpräsenzbeziehung zwischen der Besucher-Site und der Spiegel-Site gemäß Anweisungen von einem Benutzer erstellt wird;
Empfangen einer Präsenzwiederaufnahmenachricht von der Spiegel-Site zum Aktivieren des Präsenzdienstes;
Senden eines Online-Präsenzereignisses zur Spiegel-Site, wenn sich der Benutzer direkt mit der Besucher-Site verbindet;
Empfangen einer Präsenzunterbrechungsnachricht von der Spiegel-Site, wenn sich der Benutzer direkt mit der Spiegel-Site verbindet; und
Anhalten des Sendens des Online-Präsenzereignisses zur Spiegel-Site, wenn sich der Benutzer mit der Besucher-Site verbindet, nachdem die Präsenzunterbrechungsnachricht empfangen wird.

20. Verfahren nach Anspruch 19, ferner umfassend:
Empfangen der Präsenzwiederaufnahmenachricht von der Spiegel-Site, wenn sich der Benutzer von der Spiegel-Site abtrennt; und
Wiederaufnehmen des Sendens des Online-Präsenzereignisses zur Spiegel-Site, wenn sich der Benutzer mit der Besucher-Site verbindet.

21. Verfahren nach Anspruch 19, ferner umfassend:
Empfangen einer Hyptertext-Transferprotokoll-"Get"-Nachricht bzw. HTTP-"Get"-Nachricht von einem Webbrowser, der eine Webseite anfordert;
Einbetten eines Webbeacons in die Webseite, wobei der Webbeacon eine "Universal Resource Indicator" bzw. URI, die zur Spiegel-Site zeigt, umfasst; und
Zurücksenden der Webseite mit dem eingebetteten Webbeacon, was eine zur Spiegel-Site zu sendende HTTP-Anforderung auslöst, so dass der Prozess des Sendens des Online-Präsenzereignisses zur Spiegel-Site durchgeführt wird.

22. Verfahren nach Anspruch 21, ferner umfassend:
Einbetten eines JavaScript-Codes in die Webseite, wobei der JavaScript-Code Code zum Erzeugen einer Websocket-Verbindung zur Besucher-Site umfasst;
Empfangen einer Websocket-Verbindung vom Webbrowser, wenn die Webseite zum Webbrowser zurückgesendet wird;
Erhalten eines Offline-Status des Benutzers, wenn sich der Benutzer von der Besucher-Site abtrennt; und
Senden eines Offline-Präsenzereignisses zur Spiegel-Site.

## Revendications

1. Système de présence de miroir comprenant :
un site miroir (160) configuré pour :
être couplé à un site visiteur (130) par le biais d'un réseau de communication ;
établir une relation de présence de miroir au moyen d'un message de présence (170) entre le site miroir et le site visiteur ;
exécuter une présence de miroir au site miroir en réfléchissant une présence directe d'un utilisateur au site visiteur sous la forme d'une présence de miroir de l'utilisateur au site miroir en fonction de la relation de présence de miroir établie lorsque l'utilisateur est connecté au site visiteur par le biais d'un dispositif d'utilisateur, dans lequel la présence directe de l'utilisateur au site visiteur se produit lorsque l'utilisateur se connecte directement au site visiteur ; et
fournir à un appelant qui a accès au site miroir par le biais d'un site d'appel, un état de présence en ligne de l'utilisateur au site miroir en fonction de la présence de miroir même si l'utilisateur n'est pas directement connecté au site miroir.

2. Système selon la revendication 1, dans lequel le site miroir établit la relation de présence de miroir entre le site miroir et le site visiteur par abonnement afin de recevoir la présence directe de l'utilisateur au site visiteur en provenance du site visiteur.

3. Système selon la revendication 1, dans lequel le site miroir est en outre configuré pour fournir à l'appelant une identité d'utilisateur de l'utilisateur au site miroir associée à l'état de présence en ligne de l'utilisateur au site miroir comme si l'utilisateur était connecté directement au site miroir, dans lequel l'utilisateur a un identifiant d'utilisateur différent pour le site visiteur et le site miroir.

4. Système selon la revendication 1, dans lequel le site miroir est en outre configuré pour mettre en correspondance une identité de l'utilisateur au site miroir avec un emplacement Web où l'utilisateur est présent.

5. Système selon la revendication 1, comprenant en outre une pluralité de sites miroirs, dans lequel chaque site miroir présente une relation de présence de miroir avec le site visiteur.

6. Système selon la revendication 1, dans lequel le site miroir présente une pluralité de relations de présence de miroir avec une pluralité de sites visiteurs et dans lequel les relations de présence de miroir sont configurables.

7. Système selon la revendication 3, dans lequel l'identité de l'utilisateur et la relation de présence de miroir au site miroir sont utilisées lors de l'acheminement d'un appel depuis le site appelant au site visiteur.

8. Système selon la revendication 1, dans lequel le site miroir est en outre configuré pour fournir une présence de regroupement de l'utilisateur au site miroir en combinant la présence de miroir et la présence directe de l'utilisateur au site miroir.

9. Appareil comprenant :
une mémoire (632) comprenant des instructions ; et
un processeur (630) couplé à la mémoire, dans lequel les instructions contraignent le processeur à :
créer un abonnement de présence de miroir pour un service de présence depuis un site miroir (160) jusqu'à un site visiteur (130),
dans lequel la création de l'abonnement de présence de miroir établit une relation de présence de miroir au moyen d'un message de présence entre le site visiteur et le site miroir ;
envoyer une demande d'activation de présence au site visiteur lorsqu'un appelant, qui appelle un utilisateur, se connecte au site miroir par le biais d'un premier navigateur Web ;
obtenir du site miroir un état en ligne de l'utilisateur au site visiteur lorsque l'utilisateur se connecte au site visiteur ; et
fournir l'état en ligne de l'utilisateur à l'appelant par le biais du premier navigateur Web.

10. Appareil selon la revendication 9, dans lequel les instructions contraignent en outre le processeur à fournir l'état en ligne de l'utilisateur au site miroir à l'appelant par le biais du premier navigateur Web.

11. Appareil selon la revendication 9, dans lequel les instructions contraignent en outre le processeur à :
recevoir un état hors ligne de l'utilisateur au site visiteur en provenance du site visiteur lorsque l'utilisateur se déconnecte du site visiteur ; et
fournir l'état hors ligne de l'utilisateur à l'appelant par le biais du premier navigateur Web.

12. Appareil selon la revendication 9, dans lequel la création de l'abonnement de présence de miroir consiste à :
générer un message de création d'abonnement ;
envoyer le message de création d'abonnement depuis le site miroir au site visiteur ; et
recevoir du site visiteur un message de réussite indiquant la réussite de l'abonnement.

13. Appareil selon la revendication 12, dans lequel la création de l'abonnement de présence de miroir consiste à :
envoyer le message de création d'abonnement depuis un composant d'unité de présence à un composant de présence de miroir ;
envoyer le message de création d'abonnement depuis le composant de présence de miroir au site visiteur ;
recevoir le message de réussite au niveau du composant de présence de miroir, dans lequel le message de réussite est envoyé par le site visiteur ; et
transmettre le message de réussite depuis le composant de présence de miroir au composant d'unité de présence.

14. Appareil selon la revendication 9, dans lequel l'envoi de la demande d'activation de présence consiste à :
recevoir un message d'abonnement du premier navigateur Web ;
envoyer un message d'activation de présence depuis un composant d'unité de présence à un composant de présence de miroir ; et
envoyer un message de rapport de présence depuis le composant de présence de miroir au site visiteur.

15. Appareil selon la revendication 9, dans lequel la réception de l'état en ligne consiste à :
recevoir un événement de présence en ligne au niveau d'un composant de présence de miroir, dans lequel l'événement de présence en ligne est envoyé par le site visiteur ; et
transmettre l'événement de présence en ligne depuis le composant de présence de miroir à un composant d'unité de présence, et
dans lequel la fourniture de l'état en ligne de l'utilisateur à l'appelant par le biais du premier navigateur Web consiste à transmettre l'événement de présence en ligne depuis le composant d'unité de présence au premier navigateur Web.

16. Appareil selon la revendication 11, dans lequel la réception de l'état hors ligne consiste à :
recevoir un événement de présence hors ligne au niveau d'un composant de présence de miroir, dans lequel l'événement de présence hors ligne est envoyé par le site visiteur ; et
transmettre l'événement de présence hors ligne depuis le composant de présence de miroir à un composant d'unité de présence, et
dans lequel la fourniture de l'état hors ligne de l'utilisateur à l'appelant par le biais du premier navigateur Web consiste à transmettre l'événement de présence hors ligne depuis le composant d'unité de présence au premier navigateur Web.

17. Appareil selon la revendication 9, dans lequel les instructions contraignent en outre le processeur à :
regrouper l'état en ligne de l'utilisateur au site visiteur et l'état en ligne de l'utilisateur au site miroir lorsque l'utilisateur se connecte directement au site miroir par le biais d'un second navigateur Web ; et
désactiver le service de présence du site visiteur.

18. Appareil selon la revendication 9, dans lequel l'obtention de l'état en ligne de l'utilisateur au site visiteur en provenance du site visiteur lorsque l'utilisateur se connecte au site visiteur consiste à :
recevoir un message d'obtention de protocole de transfert hypertexte (HTTP) au niveau d'un composant de présence de miroir,
dans lequel le message d'obtention de protocole HTTP est envoyé par un second navigateur Web lorsque le second navigateur Web reçoit une page Web du site visiteur, dans lequel la page Web est demandée par l'utilisateur et dans lequel la page Web est intégrée avec une balise Web comprenant un indicateur de ressources universel (URI) indiquant le site miroir ;
envoyer un événement de présence en ligne depuis le composant de présence de miroir à un composant d'unité de présence ; et
envoyer un message de réussite de protocole HTTP depuis le composant de présence de miroir au second navigateur Web.

19. Procédé pour gérer une présence de miroir à un site visiteur (130), consistant à :
recevoir une demande d'abonnement de présence pour un service de présence en provenance d'un site miroir (160), dans lequel une relation de présence de miroir entre le site visiteur et le site miroir est établie en fonction d'instructions provenant d'un utilisateur ;
recevoir un message de rapport de présence du site miroir pour activer le service de présence ;
envoyer un événement de présence en ligne au site miroir lorsque l'utilisateur se connecte directement au site visiteur ;
recevoir un message d'interruption de présence du site miroir lorsque l'utilisateur se connecte directement au site miroir ; et
arrêter l'envoi de l'événement de présence en ligne au site miroir lorsque l'utilisateur se connecte au site visiteur après la réception du message d'interruption de présence.

20. Procédé selon la revendication 19, consistant en outre à :
recevoir le message de rapport de présence du site miroir lorsque l'utilisateur se déconnecte du site miroir ; et
continuer à envoyer l'événement de présence en ligne au site miroir lorsque l'utilisateur se connecte au site visiteur.

21. Procédé selon la revendication 19, consistant en outre à :
recevoir un message d'obtention de protocole de transfert hypertexte (HTTP) en provenance d'un navigateur Web demandant une page Web ;
intégrer une balise Web dans la page Web, dans lequel la balise Web comprend un indicateur de ressources universel (URI) indiquant le site miroir ; et
renvoyer la page Web ayant la balise Web intégrée qui déclenche l'envoi d'une demande de protocole HTTP au site miroir pour effectuer le processus d'envoi de l'événement de présence en ligne au site miroir.

22. Procédé selon la revendication 21, consistant en outre à :
intégrer un code JavaScript dans la page Web, dans lequel le code JavaScript comprend un code pour créer une connexion d'interface de connexion Web au site visiteur ;
recevoir une connexion d'interface de connexion Web du navigateur Web lorsque la page Web est renvoyée au navigateur Web ;
obtenir un état hors ligne de l'utilisateur lorsque l'utilisateur se déconnecte du site visiteur ; et
envoyer un événement de présence hors ligne au site miroir.
